# EUROPÄISCHE PATENTSCHRIFT

(11) **EP 1 272 575 B1**
(45) Veröffentlichungstag und Bekanntmachung des Hinweises auf die Patenterteilung: **18.01.2006**
(21) Anmeldenummer: 01909755.9
(22) Anmeldetag: 15.02.2001
(51) Int. Cl.: C09D 11/02

(54) **VERWENDUNG VON MITTELS METALLOCENKATALYSATOREN HERGESTELLTEN POLYOLEFINWACHSEN FÜR DIE HERSTELLUNG VON DRUCKFARBEN**
USE OF POLYOLEFIN WAXES OBTAINED WITH METALLOCENE CATALYSTS FOR PRODUCING PRINTING INKS
UTILISATION DE CIRES DE POLYOLEFINES OBTENUES AVEC DES CATALYSEURS METALLOCENES POUR LA PRODUCTION D'ENCRES D'IMPRIMERIE

(30) Priorität: 01.03.2000 DE 10009754; 20.12.2000 DE 10063424
(43) Veröffentlichungstag der Anmeldung: 08.01.2003
(73) Patentinhaber: Clariant GmbH, 65929 Frankfurt am Main (DE)
(72) Erfinder: SCHMALZL, Manfred, 86456 Gablingen/Lü. (DE); SLUITER, Gabriele, 86673 Binswangen (DE)
(74) Vertreter: Hütter, Klaus
(86) Internationale Anmeldenummer: PCT/EP2001/001667
(87) Internationale Veröffentlichungsnummer: WO 2001/064799

(56) Entgegenhaltungen:
- EP-A- 0 324 077
- EP-A- 0 890 619
- DE-A- 4 403 478
- US-A- 5 591 796
- US-A- 5 643 984
- US-A- 5 749 949

## Beschreibung

Die vorliegende Erfindung betrifft die Verwendung von mittels Metallocenkatalysatoren hergestellten Polyolefinwachsen in Kombination mit PTFE, Amidwachsen, Montanwachsen, natürlichen Pflanzenwachsen, Sorbitolestern, synthetischen Kohlenwasserstoffwachsen, mikro- und makrokristallinen Paraffinen, polaren Polyolefinwachsen, Polyamiden, Polyolefinen, Netzmitteln als Additivkomponente in Druckfarben.

In Druckfarben haben Wachse die Aufgabe, die Abrieb-, Scheuer- und Kratzfestigkeit von Druckerzeugnissen zu erhöhen. Die Wachse werden üblicherweise in Form von Lösemitteldispersionen oder -pasten oder aber in fester mikronisierter Form eingesetzt. Die Mikronisierung geschieht entweder durch Mahlung auf geeigneten Mühlen oder Versprühen aus der Schmelze, jeweils gegebenenfalls mit anschließender Klassierung. Die erforderlichen durchschnittlichen Teilchengrößen liegen in der Regel unterhalb von 10 µm.

Für diese Anwendung finden bisher Wachse aus verschiedenartigen Herstellungsverfahren Verwendung. Üblich ist - neben dem thermischen Abbau von hochmolekularen Polyolefinen oder der radikalischen Ethylen-Polymerisation bei hohen Drucken und Temperaturen - die Herstellung von Wachsen durch Ethylen- oder Propylen-Homo- oder Copolymerisation mit Ziegler-Natta-Katalysatoren mit einer Titan-Verbindung als katalytisch aktiver Spezies, wie beispielsweise in DE-A-1 520 914 offenbart.

In EP-A-0 890 619 wird offenbart, daß insbesondere die Verwendung von Metallocen-Katalysatorsystemen bei der Herstellung von Polyolefinwachsen zu Materialien führt, die beim Einsatz in Druckfarben verbesserte Scheuerschutzeffekte bewirken.

Die Verwendung der mittels Metallocenkatalyse hergestellten reinen Polyolefinwachse in Druckfarben deckt die grundsätzlichen Anforderungen an einen gegenüber der ursprünglichen Druckfarbe verbesserten Scheuerschutz ab. Darüberhinaus gibt es jedoch Anwendungen, die nach speziell verbessertem Scheuerschutz oder hoher Oberflächengleitwirkung oder guter Überdruckbarkeit verlangen, z.B. beim Bedrucken von abrasiven, matt-gestrichenen Papieren oder im Verpackungsdruckbereich.

Überraschend ergab sich nun, daß Polyolefinwachse, hergestellt unter Verwendung von Metallocenkatalysatoren, in Kombination mit Zusatzstoffen diesem erhöhten Anforderungsprofil in besonderer Weise entsprechen.

Gegenstand vorliegender Erfindung ist die Verwendung von Mischungen aus
a) mittels Metallocenkatalyse hergestelltem Homo- oder Copolymerisat von C₂-C₁₈-α-Olefinen, sowie Abbauwachsen, hergestellt aus mittels Metallocenkatalyse produzierten Polyolefinen längerer Kettenlänge,
   mit einer oder mehreren weiteren Zusatzstoffen, ausgewählt aus der Gruppe bestehend aus
b) Polytetrafluoroethylen mit einem Molekulargewicht (Mₙ) zwischen 30.000 und 2.000.000 g/mol,
c) thermoplastischem PTFE mit einem Molekulargewicht (Mₙ) zwischen 500.000 und 10.000.000 g/mol, dessen Partikelgröße im Bereich von 1-100 µm liegt,
d) Amidwachsen, hergestellt durch Umsetzung von Ammoniak oder Ethylendiamin mit gesättigten und ungesättigten Fettsäuren,
e) Montanwachsen einschließlich Säure- und Esterwachsen mit einer Kohlenstoffkettenlänge der Carbonsäure von C₂₂ bis C₃₆,
f) natürlichen Pflanzenwachsen,
g) Umsetzungsprodukten von Sorbit (Sorbitol) mit gesättigten und/oder ungesättigten Fettsäuren und/oder Montansäuren,
h) synthetischen Kohlenwasserstoffen,
i) Paraffinen und mikrokristallinen Wachsen, welche bei der Erdölraffination anfallen,
j) polaren Polyolefinwachsen, hergestellt durch Oxidation von Ethylen- oder Propylen-Homopolymer- und -Copolymerwachsen oder deren Pfropfung mit Maleinsäureanhydrid,
k) Polyamiden, deren Partikelgröße im Bereich von 1-100 µm liegt,
l) Polyolefinen, wie zum Beispiel Polyethylen, Polypropylen oder deren Copolymere hoher oder niedriger Dichte mit Molekulargewichten (Mn) zwischen 10.000 und 1.000.000 g/mol, deren Partikelgröße im Bereich 1-100 µm liegt,
m) Mittel, welche im allgemeinen die Oberflächenspannung von Flüssigkeiten senken (Netzmittel),

zur Herstellung von Druckfarben.

Als Polyolefinwachse a) kommen Homopolymerisate des Ethylens oder Propylens oder Copolymerisate des Ethylens oder Propylens mit einem oder mehreren 1-Olefinen, in Frage. Als 1-Olefine werden lineare oder verzweigte Olefine mit 2-18 C-Atomen, vorzugsweise 3-6 C-Atomen, eingesetzt. Die 1-Olefine können eine aromatische Substitution tragen. Beispiele hierfür sind Ethylen, Propylen, 1-Buten, 1-Hexen, 1-Octen oder 1-Octadecen, weiterhin Styrol. Bevorzugt sind Homopolymere des Ethylens oder Propylens oder Copolymere des Ethylens mit Propylen oder 1-Buten. Handelt es sich um Copolymere so bestehen diese vorzugsweise zu 70-99,9, insbesondere zu 80-99 Gew.-% aus Ethylen. In einer weiteren bevorzugten Ausführungsform weisen die Wachse eine Molekulargewichtsverteilung M_{w}/Mₙ < 5 auf. Ihre Schmelzviskosität liegt vorzugsweise zwischen 5 und 100 000 mPa·s.

Besonders bevorzugt sind Polyolefinwachse mit einem Tropfpunkt zwischen 90 70 und 165°C, insbesondere zwischen 100 und 160°C, einer Schmelzviskosität bei 140°C (Polyethylenwachse) bzw. bei 170°C (Polypropylenwachse) zwischen 10 und 10000 mPa·s, insbesondere zwischen 50 und 5000 mPa·s und einer Dichte bei 20°C zwischen 0,85 und 0,96 cm³/g.

Bei Zusatzstoff b) handelt es sich in bevorzugten Ausführungsformen um Polytetrafluoroethylen mit einem Molekulargewicht zwischen 100000 und 1000000 g/mol.

Bei Zusatzstoff c) handelt es sich in bevorzugten Ausführungsformen um thermoplastisches Polytetrafluoroethylen mit Partikelgrößen im Bereich von 3 bis 30 µm.

Bei Zusatzstoff d) handelt es sich in bevorzugten Ausführungsformen um Amidwachse, herstellbar durch Umsetzung von Ammoniak oder Ethylendiamin mit Stearinsäure, Talgfettsäure, Palmitinsäure oder Erucasäure.

Bei Zusatzstoff e) handelt es sich um Montanwachse einschließlich Säure- und Esterwachsen mit einer Kohlenstoffkettenlänge der Carbonsäure vonC₂₂ bis C₃₆. Bei den Esterwachsen handelt es sich vorzugsweise um Umsetzungsprodukte der Montansäuren mit ein oder mehrwertigen Alkoholen mit 2 bis 6 C-Atomen, wie zum Beispiel Ethandiol, Butan-1,3-diol oder Propan-1,2,3-triol.

Bei Zusatzstoff f) handelt es sich in einer bevorzugten Ausführungsform um Carnaubawachs.

Bei Zusatzstoff g) handelt es sich in bevorzugten Ausführungsformen um Umsetzungsprodukte von Sorbit (Sorbitol) mit Stearinsäure, Talgfettsäure. Palmitinsäure oder Erucasäure.

Bei Zusatzstoff h) handelt es sich in bevorzugten Ausführungsformen um Fischer-Tropsch-Wachse.

Bei Zusatzstoff i) handelt es sich vorzugsweise um Paraffine mit Tropfpunkten zwischen 48 und 65°C und mikrokristalline Wachse mit Tropfpunkten zwischen 75 und 95°C.

Bei Zusatzstoff j) handelt es sich um polare Polyolefinwachse, herstellbar durch Oxidation von Ethylen- oder Propylen- Homopolymer- und -Copolymerwachsen oder deren Pfropfung mit Maleinsäureanhydrid. Besonders bevorzugt wird hierfür von Polyolefinwachse mit einem Tropfpunkt zwischen 90 und 165°C, insbesondere zwischen 100 und 160°C, einer Schmelviskosität bei 140°C (Polyethylenwachse) bzw. bei 170°C (Polypropylenwachse) zwischen 10 und 10000 mPas, insbesondere zwischen 50 und 5000 mPas und einer Dichte bei 20°C zwischen 0,85 und 0,96 g/cm³ ausgegangen.

Bei Zusatzstoff k) handelt es sich vorzugsweise um Polyamid-6, Polyamid-6,6 und Polyamid-12. In einer weiteren bevorzugten Ausführungsform liegt die Partikelgröße der Polyamide im Bereich von 3-30 µm.

Bei Zusatzstoff l) handelt es sich vorzugsweise um Polyolefine, wie zum Beispiel Polyethylen, Polypropylen oder deren Copolymere hoher oder niedriger Dichte mit Molekulargewichten (Mₙ) zwischen 15.000 bis 500.000 g/mol. In einer weiteren bevorzugten Ausführungsform liegt die Partikelgröße bei 3-30 µm.

Bei Zusatzstoff m) handelt es sich um amphiphile Verbindungen, welche im allgemeinen die Oberflächenspannung von Flüssigkeiten senken, wie zum Beispiel Alkylethoxylate, Fettalkoholethoxylate, Alkylbenzolsulfonate oder Betaine.

Das Mischungsverhältnis von Bestandteil a) zu den Bestandteilen b) bis m) kann im Bereich von 1 bis 99 Gew.-% a) zu 1 bis 99 Gew.-% b) bis m), bevorzugt zwischen 5 bis 50 %, variiert werden. Wird eine Mischung aus mehreren der Bestandteile b) bis m) verwendet, so gilt die Mengenangabe für die Summe aus den Mengen dieser Bestandteile.

In einer bevorzugten Ausführungsform werden die oben beschriebenen Wachse in mikronisierter Form für den erfindungsgemäßen Zweck verwendet.

Die Metallocenkatalysatoren zur Herstellung der Polyolefinwachse sind chirale oder nichtchirale Übergangsmetallverbindungen der Formel M¹Lₓ. Die Übergangsmetallverbindung M¹Lₓ enthält mindestens ein Metallzentralatom M¹, an das mindestens ein π-Ligand, z.B. ein Cyclopentadienylligand gebunden ist. Darüber hinaus können Substituenten, wie z.B. Halogen-, Alkyl-, Alkoxy- oder Arylgruppen an das Metallzentralatom M¹ gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z.B. beschrieben in EP-A-0 632 063.

Beispiele für allgemeine Strukturformeln von Metallocenen, sowie für deren Aktivierung mit einem Cokatalysator sind u.a. in EP-A-0 571 882 gegeben.

Die Polyolefinwachse aus der Metallocen-Katalyse werden im folgenden Komponente 1 genannt, die Zusatzstoffe b) bis m) sind Komponente 2. Die Mischungen können hergestellt werden durch gemeinsames Vermahlen der beiden Komponenten oder durch vorheriges Mischen der Komponenten in schmelzflüssiger Phase und anschließendes Versprühen oder Vermahlen.

### Beispiele

**Tabelle 1: Physikalische Eigenschaften der getesteten Polyolefinwachse**

| | Typ | Schmelzviskosität mPas | Tropfpunkt °C | M_{w}/Mₙ | Mn g/mol | Dichte g/cm³ |
|---|---|---|---|---|---|---|
| Wachs 1 | Metallocen Ethylen-Homopolymer Wachs | 350 bei 140°C | 124 | 2,4 | 990 | 0.965 |
| Wachs 2 | Metallocen Propylen-Homopolymer Wachs | 40 bei 170°C | 135 | 2,1 | 1870 | 0.880 |
| Vergleichsmuster 1 | Ethylen-Homopolymerwachs, hergestellt mit Ziegler-Natta-Katalysator | 300 bei 140°C | 125 | 2,8 | 1500 | 0,970 |

Auf der Basis von Wachs 1 und 2 sowie Vergleichswachs 1 wurden folgende Mischungen hergestellt:

**Tabelle 2: Mischungen von Polyolefinwachsen mit Zusatzstoffen**

| | Kurzbezeichnung | Typ | Mischungsverhältnis Gewichtsteile |
|---|---|---|---|
| Mischung 1 | M1 | Wachs 1 | 93 |
| | | PTFE | 7 |
| Mischung 2 | M2 | Vergleichswachs 1 | 93 |
| | | PTFE | 7 |
| Mischung 3 | M3 | Wachs 1 | 60 |
| | | Paraflint H2 | 40 |
| Mischung 4 | M4 | Vergleichswachs 1 | 60 |
| | | Paraflint H2 | 40 |
| Mischung 5 | M5 | Wachs 1 | 50 |
| | | Sorbitantristearat | 50 |
| Mischung 1 | M1 | Wachs 1 | 93 |
| | | PTFE | 7 |
| Mischung 6 | M6 | Vergleichswachs 1 | 50 |
| | | Sorbitantristearat | 50 |
| Mischung 7 | M7 | Wachs 1 | 50 |
| | | Sorbitantrimontanat | 50 |
| Mischung 8 | M8 | Vergleichswachs 1 | 50 |
| | | Sorbitantrimontanat | 50 |
| Mischung 9 | M9 | Wachs 1 | 50 |
| | | Ethylenbisstearoylamid | 50 |
| Mischung 10 | M10 | Vergleichswachs 1 | 50 |
| | | Ethylenbisstearoylamid | 50 |
| Mischung 11 | M11 | Wachs 1 | 80 |
| | | Polares Polyethylenwachs | 20 |
| Mischung 12 | M12 | Vergleichswachs 1 | 80 |
| | | Polares Polyethylenwachs | 20 |

Zur Herstellung der Mischungen wurden die pulverförmigen Ausgangssubstanzen zunächst vorgemischt und anschließend auf einer Fließbettgegenstrahlmühle der Firma Hosokawa Alpine AG auf eine durchschnittliche Teilchengröße unter 10 µm zerkleinert. Die Messung der Teilchengröße geschieht mit der Laserbeugungsmethode in einem Gerät der Firma Malvern. Man kann die Wachse der Druckfarbe als trockenes Pulver oder vorzugsweise als Dispersion in Bindemittellösung oder Lösemittel zusetzen.

### Beispiele für die Druckfarbenherstellung

### 1) Offsetfarbe

Die Mischungen M1, M2, M3, M4 , M9 und M10 wurden zu 1,5 Gew.-% unter intensivem Rühren mit einem Dissolver und anschließender Homogenisierung auf einer Dreiwalze in eine Offsetfarbe (Novaboard® Cyan 4 C 86, BASF Drucksysteme GmbH) eingearbeitet. Man fertigte einen Probedruck (Prüfbau-Mehrzweck-Probedruckmaschine System Dr. Dürner) auf Papier des Typs Phoenomatt® 115 g/m² (Scheufelen GmbH + Co KG) an und untersuchte das Scheuerverhalten auf einem Scheuerprüfgerät (Scheuerprüfer Prüfbau Quartant) bei einer Scheuerbelastung von 48 g/cm², Scheuergeschwindigkeit 15 cm/sec. Beurteilt wurde die Intensität der nach 50, 100 bzw. 200 Scheuerzyklen (Hub) auf das Prüfblatt übertragenen Farbe (Farbdifferenz nach DIN 6174, Messung mit Hunterlab D 25-2, Hunter) sowie die Verletzung des Druckbildes.

**Tabelle 3: Ergebnis der Prüfung in einer Offset-Farbe bei Einarbeitung als Mikropulver**

| Beispiel Nr. | | Teilchengröße d₅₀ µm | Farbdifferenz | | Verletzung des Druckbildes |
|---|---|---|---|---|---|
| | | | 100 Hub | 200 Hub | |
| 1 | Vergleich ohne Wachs | - | 15,5 | 18,3 | Ja |
| 2 | M1 | 8,0 | 1,2 | 1,8 | Nein |
| 3 | M2 | 8,5 | 2,0 | 2,4 | Nein |
| 4 | M3 | 7,8 | 3,5 | 4,2 | Nein |
| 5 | M4 | 8,0 | 5,2 | 7,6 | Ja |
| 6 | M9 | 6,5 | 3,2 | 4,2 | Nein |
| 7 | M10 | 6,7 | 5,8 | 8,3 | Ja |

Die erfindungsgemäßen Wachse bewirken eine geringere Farbdifferenz und damit eine verbesserte Abriebfestigkeit.

### 2) Tiefdruckfarbe

Die Mischungen M3, M4, M5, M6, M7 und M8 wurden zu 1 Gew.-% unter intensivem Rühren mit einem Dissolver in eine Illustrationstiefdruckfarbe (Typ RR Grav rot, Siegwerk Farbenfabrik) eingearbeitet. Es wurde ein Probedruck (Tiefdruck-Probedruckgerät LTG 20, Einlehner Prüfmaschinenbau) auf Papier des Typs Allgäu 60 g/m² (G. Haindl'sche Papierfabriken KG) angefertigt und entsprechend Beispiel Offsetfarbe geprüft.

**Tabelle 4: Ergebnis der Prüfung in einer Tiefdruckfarbe bei Einarbeitung als Mikropulver**

| Beispiel Nr. | | Teilchengröße µm | Farbdifferenz 100 Hub | | Dynamischer Reibungskoeffizient µ |
|---|---|---|---|---|---|
| | | | Vollton | Halbton | |
| 8 | Vergleich ohne Wachs | - | 16,7 | 15,1 | 0,53 |
| 9 | M3 (erf.) | 7,5 | 2,9 | 1,8 | 0,33 |
| 10 | M4 (vergl.) | 7,6 | 3,4 | 2,2 | 0,35 |
| 11 | M5 (erf.) | 8,5 | 2,0 | 1,1 | 0,27 |
| 12 | M6 (vergl.) | 8,5 | 2,5 | 1,7 | 0,28 |
| 13 | M7 (erf.) | 8,4 | 2,6 | 1,2 | 0,26 |
| 14 | M8 (vergl.) | 8,3 | 3,1 | 1,8 | 0,27 |

Die erfindungsgemäßen Wachse bewirken eine geringere Farbdifferenz und damit eine verbesserte Abriebfestigkeit. Überraschenderweise hat sich auch eine Erniedrigung der Gleitreibung bei Zusatz von Sorbitanestern gezeigt.

### 3) Flexodruckfarbe

Die Mischungen M3, M4, M5, M6, M7, M8, M11 und M12 wurden zu 1 Gew.-% unter intensivem Rühren mit einem Dissolver in eine wäßrige Flexodruckfarbe eingearbeitet. Die Flexodruckfarbe setzt sich zusammen aus 35 Gew.-% Synthacryl® SW 175, 20 Gew.-% Hostapermblau® B2G, 45 Gew.-% Wasser. Mit einem Drahtrakel wurde die Farbe mit einer Naßfilmstärke von 6 µm auf Papier des Typs Allgäu 80 g/m² (G. Haindl'sche Papierfabriken KG) angefertigt und entsprechend Beispiel Offsetfarbe geprüft.

**Tabelle 5: Ergebnis der Prüfung in einer Flexodruckfarbe bei Einarbeitung als Mikropulver**

| Bsp. Nr. | | Teilchengröße µm | Farbdifferenz 50 Hub | Dynamischer Reibungskoeffizient µ |
|---|---|---|---|---|
| 15 | Vergleich ohne Wachs | - | 7,4 | 0,37 |
| 16 | M3 (erf.) | 7,5 | 3,8 | 0,23 |
| 17 | M4 (vergl.) | 7,6 | 4,4 | 0,25 |
| 18 | M5 (erf.) | 8,5 | 3,0 | 0,18 |
| 19 | M6 (vergl.) | 8,5 | 3,7 | 0,19 |
| 20 | M7 (erf.) | 8,4 | 2,8 | 0,16 |
| 21 | M8 (vergl.) | 8,3 | 3,1 | 0,17 |
| 22 | M11 (erf.) | 8,6 | 3,1 | 0,23 |
| 23 | M12 (vergl.) | 8,5 | 3,9 | 0,24 |

Die erfindungsgemäßen Wachse bewirken eine geringere Farbdifferenz und damit eine verbesserte Abriebfestigkeit. Überraschenderweise hat sich auch eine Erniedrigung der Gleitreibung bei Zusatz von Sorbitanestern gezeigt.

## Patentansprüche

1. Verwendung von Mischungen aus
a) mittels Metallocenkatalyse hergestelltem Homo- oder Copolymerisat von C₂-C₁₈-α-Olefinen, sowie Abbauwachsen, hergestellt aus mittels Metallocenkatalyse produzierten Polyolefinen längerer Kettenlänge, mit einer oder mehreren weiteren Zusatzstoffen, ausgewählt aus der Gruppe bestehend aus
b) Polytetrafluoroethylen mit einem Molekulargewicht (Mₙ) zwischen 30.000 und 2.000.000 g/mol,
c) thermoplastischem PTFE mit einem Molekulargewicht (Mₙ) zwischen 500.000 und 10.000.000 g/mol, dessen Partikelgröße im Bereich von 1-100 µm liegt,
d) Amidwachsen, hergestellt durch Umsetzung von Ammoniak oder Ethylendiamin mit gesättigten und ungesättigten Fettsäuren,
e) Montanwachsen einschließlich Säure- und Esterwachsen mit einer Kohlenstoffkettenlänge der Carbonsäure von C₂₂ bis C₃₆,
f) natürlichen Pflanzenwachsen,
g) Umsetzungsprodukten von Sorbit (Sorbitol) mit gesättigten und/oder ungesättigten Fettsäuren und/oder Montansäuren,
h) synthetischen Kohlenwasserstoffen,
i) Paraffinen und mikrokristallinen Wachsen, welche bei der Erdölraffination anfallen,
j) polaren Polyolefinwachsen, hergestellt durch Oxidation von Ethylen- oder Propylen-Homopolymer- und -Copolymerwachsen oder deren Pfropfung mit Maleinsäureanhydrid,
k) Polyamiden, deren Partikelgröße im Bereich von 1-100 µm liegt,
l) Polyolefinen, wie zum Beispiel Polyethylen, Polypropylen oder deren Copolymere hoher oder niedriger Dichte mit Molekulargewichten (Mn) zwischen 10.000 und 1.000.000 g/mol, deren Partikelgröße im Bereich 1-100 µm liegt,
m) Mittel, welche im allgemeinen die Oberflächenspannung von Flüssigkeiten senken (Netzmittel),
zur Herstellung von Druckfarben.

2. Verwendung nach Anspruch 1, wobei Bestandteil a) ein Ethylenhomo- oder Copolymerwachs ist.

3. Verwendung nach Anspruch 1, wobei Bestandteil a) ein Propylenhomo- oder Copolymerwachs ist.

4. Verwendung nach einem oder mehreren der Ansprüche 1 bis 3, wobei die Polyolefinwachse eine Molekulargewichtsverteilung Mw/Mn < 5 aufweisen.

5. Verwendung nach einem oder mehreren der Ansprüche 1 bis 4, wobei die Polyolefinwachse eine Schmelzviskosität von 5 bis 100000 mPas aufweisen.

6. Verwendung nach einem oder mehreren der Ansprüche 1 bis 5, wobei die Polyolefinwachse einen Tropfpunkt von 70 bis 165°C aufweisen

7. Verwendung nach einem oder mehreren der Ansprüche 1 bis 6, wobei der Anteil des Zusatzstoffs 1-99 Gew.-% bezogen auf die Gesamtmasse der Mischung beträgt.

8. Verwendung nach einem oder mehreren der Ansprüche 1 bis 7, wobei die Wachse in mikronisierter Form eingesetzt werden.

## Claims

1. The use of mixtures comprising
a) homopolymer or copolymer of C₂-C₁₈ α-olefins, prepared using metallocene catalysis, and also degradation waxes, prepared from longer-chain polyolefins produced using metallocene catalysis, with one or more further additives selected from the group consisting of
b) polytetrafluoroethylene having a molecular weight (Mₙ) of between 30 000 and 2 000 000 g/mol,
c) thermoplastic PTFE having a molecular weight (Mn) of between 500 000 and 10 000 000 g/mol, whose particle size is situated in the range 1-100 µm,
d) amide waxes prepared by reacting ammonia or ethylenediamine with saturated and unsaturated fatty acids,
e) montan waxes, including acid waxes and ester waxes having a carbon chain length of the carboxylic acid of from C₂₂ to C₃₆,
f) natural plant waxes,
g) reaction products of sorbitol with saturated and/or unsaturated fatty acids and/or montanic acids,
h) synthetic hydrocarbons,
i) paraffins and microcrystalline waxes obtained in the course of petroleum refining,
j) polar polyolefin waxes prepared by oxidizing ethylene or propylene homopolymer and copolymer waxes or grafting them with maleic anhydride,
k) polyamides whose particle size is situated in the range 1-100 µm,
l) polyolefins, such as, for example, polyethylene, polypropylene or copolymers thereof of high or low density having molecular weights (Mn) of between 10 000 and 1 000 000 g/mol whose particle size is situated in the range 1-100 µm,
m) agents which in general lower the surface tension of liquids (wetting agents),
for preparing printing inks.

2. The use as claimed in claim 1, wherein constituent a) is an ethylene homopolymer or copolymer wax.

3. The use as claimed in claim 1, wherein constituent a) is a propylene homopolymer or copolymer wax.

4. The use as claimed in one or more of claims 1 to 3, wherein the polyolefin waxes have a molecular weight distribution M_{w}/Mₙ < 5.

5. The use as claimed in one or more of claims 1 to 4, wherein the polyolefin waxes have a melt viscosity of from 5 to 100 000 mPas.

6. The use as claimed in one or more of claims 1 to 5, wherein the polyolefin waxes have a dropping point of from 70 to 165°C.

7. The use as claimed in one or more of claims 1 to 6, wherein the fraction of the additive is 1-99% by weight based on the overall mass of the mixture.

8. The use as claimed in one or more of claims 1 to 7, wherein the waxes are used in micronized form.

## Revendications

1. Utilisation, pour préparer des encres d'imprimerie, de mélanges constitués
a) d'un homo- ou d'un co-polymère, préparé par une catalyse à l'aide de métallocènes, d'α-oléfines en C₂-C₁₈, ainsi que de cires de dégradation préparées à partir de polyoléfines produites par une catalyse à l'aide de métallocènes, ayant une grande longueur de chaîne, avec un ou plusieurs additifs supplémentaires choisis dans l'ensemble comprenant :
b) le polytétrafluoréthylène, ayant une masse moléculaire (Mₙ) comprise entre 30 000 et 2 000 000 g/mole,
c) le PTFE thermoplastique, ayant une masse moléculaire (Mₙ) comprise entre 500 000 et 10 000 000 g/mole, dont la granulométrie est comprise dans la plage de 1 à 100 µm,
d) les cires d'amides, préparées par réaction d'ammoniac ou d'éthylènediamine avec des acides gras saturés ou insaturés,
e) les cires de lignite, y compris les cires d'acides et les cires d'esters, ayant une longueur de chaîne carbonée de l'acide carboxylique de C₂₂ à C₃₆,
f) les cires végétales naturelles,
g) les produits de la réaction du sorbitol avec des acides gras saturés et/ou insaturés et/ou des acides montaniques,
h) les hydrocarbures synthétiques,
i) les paraffines et les cires microcristallines qui sont obtenues lors du raffinage du pétrole,
j) les cires de polyoléfines polaires préparées par oxydation de cires d'homopolymères et de copolymères de l'éthylène ou du propylène, ou leurs produits obtenus par greffage d'anhydride maléique,
k) les polyamides dont la granulométrie est comprise dans la plage de 1 à 100 µm,
l) les polyoléfines, telles par exemple que le polyéthylène, le polypropylène ou leurs copolymères haute densité ou basse densité, ayant une masse moléculaire (Mₙ) comprise entre 10 000 et 1 000 000 g/mole et dont la granulométrie est comprise dans la plage de 1 à 100 µm,
m) les produits qui d'une manière générale diminuent la tension superficielle des liquides (mouillants).

2. Utilisation selon la revendication 1, pour laquelle le constituant a) est une cire d'un homo- ou d'un copolymère de l'éthylène.

3. Utilisation selon la revendication 1, pour laquelle le constituant a) est une cire d'un homo- ou d'un copolymère du propylène.

4. Utilisation selon l'une ou plusieurs des revendications 1 à 3, pour laquelle les cires de polyoléfine présentent une distribution des masses moléculaires M_{w}/Mₙ < 5.

5. Utilisation selon l'une ou plusieurs des revendications 1 à 4, pour laquelle les cires de polyoléfine ont une viscosité à l'état fondu de 5 à 100 000 mPa.s.

6. Utilisation selon l'une ou plusieurs des revendications 1 à 5, pour laquelle les cires de polyoléfine ont un point de goutte de 70 à 165°C.

7. Utilisation selon l'une ou plusieurs des revendications 1 à 6, pour laquelle la proportion de l'additif est de 1-99 % en poids par rapport au poids total du mélange.

8. Utilisation selon l'une ou plusieurs des revendications 1 à 7, pour laquelle les cires sont utilisées sous forme micronisée.
